# EUROPÄISCHE PATENTSCHRIFT

(11) **EP 1 093 709 B1**
(45) Veröffentlichungstag und Bekanntmachung des Hinweises auf die Patenterteilung: **11.02.2004**
(21) Anmeldenummer: 00122772.7
(22) Anmeldetag: 19.10.2000
(51) Int. Cl.: A01D 43/10

(54) **Erntegerät mit einer Leitvorrichtung im Förderfluss**
Harvesting implement with crop discharge guiding means
Appareil récolteur avec moyens de guidage de décharge

(30) Priorität: 23.10.1999 DE 19951079
(43) Veröffentlichungstag der Anmeldung: 25.04.2001
(73) Patentinhaber: DEERE & COMPANY, Moline, Illinois 61265-8098 (US)
(72) Erfinder: Chont, Pascal, 21000 Dijon (FR)
(74) Vertreter: Magin, Ludwig Bernhard

(56) Entgegenhaltungen:
- EP-A- 1 008 290
- WO-A-88/05627
- CH-A- 688 568
- DE-A- 19 632 000
- DE-A- 19 736 978
- DE-C- 4 422 502
- FR-A- 2 078 637
- US-A- 3 118 264
- US-A- 3 224 177
- US-A- 3 241 300
- US-A- 3 543 491
- US-A- 4 099 364
- US-A- 5 930 988

## Beschreibung

Die Erfindung betrifft ein Erntegerät mit einer Gutbehandlungsvorrichtung, einer oberen Leitfläche und wenigstens einem Leitmittel jeweils zum Führen eines Gutstroms stromabwärts der Gutbehandlungsvorrichtung.

Die CH-A5-688 568 offenbart eine Aufbereitungseinrichtung für landwirtschaftliches Halmgut sowohl mit wie auch ohne vorgelagertem Mähwerk. Stromabwärts der Aufbereitungseinrichtung ist eine Haube vorgesehen, die das von der Aufbereitungseinrichtung abgegebene Mähgut stromabwärts führt, um es in geeigneter Weise auf den Boden abzugeben. An der Unterseite der Decke der Haube sind mehrere symmetrisch zueinander angeordnete Leitmittel vorgesehen, die das Halmgut streuen.

Es ist ferner bekannt, an der Unterseite der Decke der Haube ein sogenanntes Schwadblech anzubringen, auf das der Gutstrom an einer Stelle auftrifft, an der die Haube breiter ist als an ihrem gewöhnlichen Abgabeende. Auf diese Weise kann ein relativ breites Schwad gebildet werden.

Das der Erfindung zugrunde liegende Problem wird darin gesehen, daß zur Verwendung eines Schwadblechs die Leitmittel demontiert sein müssen und umgekehrt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Leitelement, bzw. mehrere Leitelemente, durch die Öffnung(en) in den Gutstrom gebracht werden oder nicht. Wenn es nicht in den Gutstrom eindringt, d. h. eine Außerbetriebsstellung einnimmt, kann statt dessen ein Schwadblech angebracht bzw. in Stellung gebracht werden.

Wenn die Leitfläche gleichzeitig die Decke eines Gehäuses ist, kann das Leitmittel sicher und stabil auf diesem montiert werden. Es bleibt dennoch Freiraum für ein Schwadblech im Innern des Gehäuses, z. B. vor oder unter der Eintrittsstelle des oder der Leitelemente.

Wird die Leitfläche von einem sogenannten Schwadblech gebildet, kann das Schwadblech sowohl in eine Stellung gebracht werden, in der es mit der Unterkante der Leitelemente abschließt und somit alleine wirksam ist; das Schwadblech kann aber auch in eine obere Stellung geschwenkt werden, in der sich die Leitelemente weitestmöglich durch die Öffnungen erstrecken und bestmöglichst auf den Gutstrom einwirken.

Sowohl die Funktion des Schwadblechs als auch die der Leitelemente kann verwirklicht werden, wenn das Schwadblech unterhalb der Decke angeordnet ist und in den Gutstrom eintauchen kann. Dabei kann sich aus dem Schwadblech und der Unterseite der Decke eine zusammengesetzte Leitfläche ergeben oder es wirkt nur das Schwadblech als Leitfläche. Die Leitelemente können sich durch das Schwadblech alleine oder auch durch das Schwadblech und die Decke erstrecken, wenn für diese vertikal fluchtende Öffnungen eingebracht werden. Die Leitelemente erstrecken sich also gegebenenfalls durch beide.

Besondere Vorteile können darin liegen, daß ein oder mehrere Leitelemente individuell in den Gutstrom eingeführt werden; soll jedoch stets ein gleiches Schwadbild oder Schwadlage, Streubild oder dergleichen erreicht werden, ist es hilfreich, wenn mehrere Leitelemente zusammengefaßt, miteinander verbunden - wenn auch evtl. lösbar - und gemeinsam in ihre Betriebsstellung gebracht werden. In diesem Fall reicht auch die Verwendung eines einziges Stellmotors oder Stellvorrichtung allgemein aus.

Anstatt einer geradlinigen Verstellung der Leitelemente mit dem Leitmittel, die zwar auch den erfinderischen Gedanken verwirklichen würde, kann das Leitmittel um eine waagrechte Achse geschwenkt werden, was technisch einfacher zu erreichen ist.

Wenn die Öffnung bzw. die Öffnungen zur Aufnahme des bzw. der Leitelemente am stromabwärts gelegenen Ende offen ist/sind, kann sich dort kein Erntegut festhängen und zu Materialstaus führen.

Leitelemente, die quer zu der Gutflußrichtung, d. h. nach links oder rechts verstellbar sind, machen es möglich, den Gutstrom zur Seite abzulenken und somit ein Schwad asymmetrisch zu der Längsachse des Erntegeräts abzulegen.

Mit einer Anordnung mehrerer Leitelemente parallel zueinander kann ein Versatz des Schwads seitlich zu der Längsmittenachse des Erntegeräts erreicht werden. Eine asymmetrische Divergenz der Leitelemente führt zu einer zumindest geringen Streuung seitlich einer Ebene und eine symmetrische Divergenz bewirkt eine Streuung zu beiden Seiten der Längsmittenachse des Erntegeräts.

Ein Erntegerät mit einer Mähvorrichtung oder einer Halmgutaufbereitungsvorrichtung eignet sich hervorragend als Anwendungsgebiet, da mit solchen Geräten eine Vielzahl unterschiedlicher Einsatzbedingungen abgedeckt werden muß.

Die größtmögliche Einsatzmöglichkeit eines solchen Erntegeräts wird dann erzielt, wenn sowohl eine Mähvorrichtung als auch eine Halmgutaufbereitungsvorrichtung vorhanden ist, wobei das Halmgut stromabwärts der Halmgutaufbereitungsvorrichtung in einem schmalen oder breiten Schwad oder breit gestreut abgelegt werden kann.

In der Zeichnung ist ein nachfolgend näher beschriebenes Ausführungsbeispiel der Erfindung dargestellt. Es zeigt:
- Fig. 1: ein Erntegerät in schematischer Darstellung und in Draufsicht mit einer Leitfläche und einem Leitmittel,

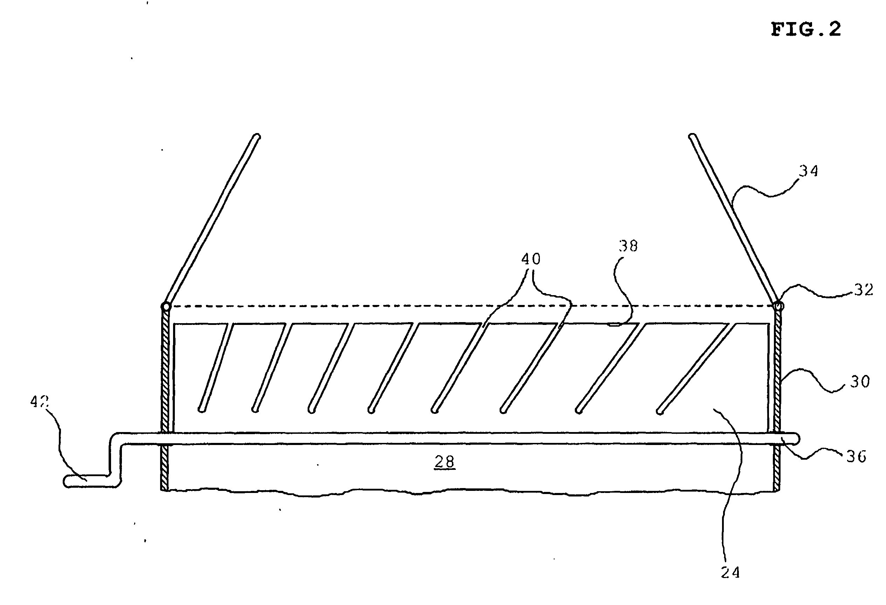

- Fig. 2: die Leitfläche gemäß Figur 1 in einer vergrößerten Darstellung,

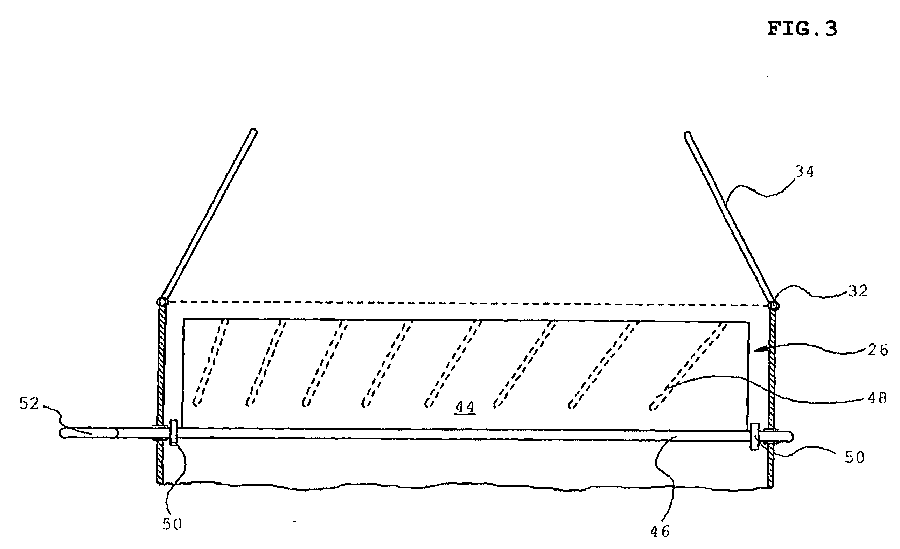

- Fig. 3: das Leitmittel gemäß Figur 1 in einer vergrößerten Darstellung und
- Fig. 4: das Leitmittel und die Leitfläche in einer Seitenansicht und im Schnitt.

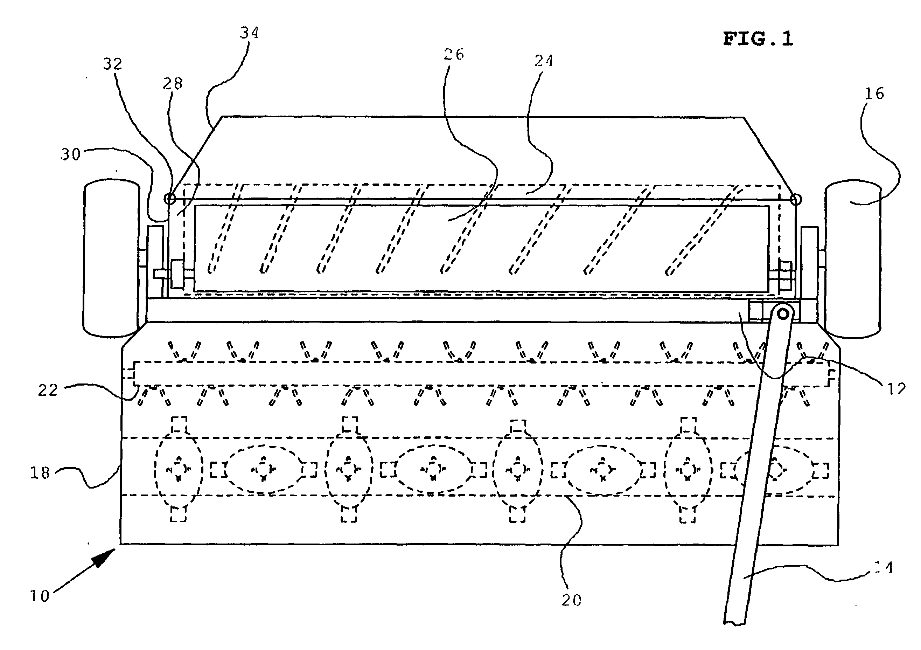

Ein in Figur 1 dargestelltes Erntegerät 10 enthält einen Rahmen 12, eine Deichsel 14, Räder 16, ein Gehäuse 18, eine Gutbehandlungsvorrichtung 20, eine Halmgutaufbereitungsvorrichtung 22, eine Leitfläche 24 und ein Leitmittel 26.

Das Erntegerät 10 ist in diesem Ausführungsbeispiel in der Art eines Mähschlagzetters ausgebildet. Dies ist nicht zwingend; vielmehr ist auch eine Ausbildung als reines Mähgerät oder als reines Aufbereitungsgerät möglich. Das Erntegerät 10 hat die Aufgabe, gemähtes oder zu mähendes Gut zu mähen bzw. aufzubereiten und hinter sich in einem Schwad auf dem Boden abzulegen. Die Breite oder Lage und Dichte des Schwades soll so variiert werden können, daß das Schwad mehr oder weniger breit oder versetzt bzw. dicht liegt, damit eine nachfolgende Erntemaschine, z. B. ein Feldhäcksler oder eine Presse das Erntegut problemlos aufnehmen kann.

Der Rahmen 12 ist im wesentlichen wie eine Brücke ausgebildet und erstreckt sich quer zur Fahrtrichtung, um an jedem Ende mit einem vertikalen Schenkel eines der Räder 16 in bekannter Weise vertikal schwenkbar aufzunehmen.

Die Deichsel 14 ist in diesem Ausführungsbeispiel auf der in Vorwärtsfahrtrichtung linken Seite des Rahmens 12 an diesen horizontal schwenkbar angeschlossen und verbindet das Erntegerät 10 mit einem nicht gezeigten Zugfahrzeug. Die Deichsel 14 könnte auch an der rechten Seite oder in der Mitte des Rahmens 12 an diesen angeschlossen werden.

Die Räder 16 stützen den Rahmen 12 auf dem Boden ab und bilden mit dem zugehörigen vertikalen Schenkel des Rahmens 12 zwischen sich einen Zwischenraum, in dem das Erntegut in einem mehr oder weniger breiten Schwad abgelegt werden kann.

Das Gehäuse 18 ist im wesentlichen kastenförmig aus Blech gebildet und umfaßt seitlich und oben die Gutbehandlungsvorrichtung 20 und die Halmgutaufbereitungsvorrichtung 22, um einen Kanal zu bilden, in dessen Innern das gemähte Gut bis zu einer Ablagestelle hinter und unter dem Erntegerät 10 geführt wird. Während das Gehäuse 18 in einem vorderen und in Figur 1 unten gelegenen Bereich wenigstens bis an die Außenkanten der Räder 16 reicht, ist es in seinem rückwärtigen Bereich so schmal ausgebildet, daß es in dem Zwischenraum des Rahmens 12 ausreichend Platz findet. Das Gehäuse 18 erstreckt sich bis hinter den Rahmen 12 und je nach Ausführungsform auch bis hinter die Räder 16. Im rückwärtigen Bereich des Gehäuses 18 ist eine Decke 28 vorgesehen, die seitlich in Seitenwände 30 übergeht. An der rückwärtigen Kante der Seitenwände 30 sind mittels vertikaler Schwenklager 32 Seitenbleche 34 angeschlossen, die geeignet sind, das Mähgut in seitlicher Richtung zusammenzuführen.

Die Gutbehandlungsvorrichtung 20 ist in diesem Ausführungsbeispiel als eine Mähvorrichtung ausgebildet und zwar in der Mähscheibenbauweise. Alternativ könnte auch die Trommelbauweise, ein Messerbalken oder dergleichen verwendet werden. Mittels dieser Art einer Gutbehandlungsvorrichtung 20 wird das Mähgut vom Boden getrennt und nach hinten zur Ablage auf dem Boden gefördert. Die Gutbehandlungsvorrichtung 20 könnte jedoch auch die Halmgutaufbereitungsvorrichtung 20 direkt sein, die bereits gemähtes Halmgut aufnimmt, aufbereitet und nach hinten zur Ablage auf dem Boden abgibt.

Die Halmgutaufbereitungsvorrichtung 22 ist so breit wie oder schmaler als die Gutbehandlungsvorrichtung 20 und bearbeitet das Halmgut derart, daß es schneller trocknet. Anschließend gibt sie das Halmgut zur Leitfläche 24 weiter. Die Halmgutaufbereitungsvorrichtung 22 kann als Zinkenrotor, als Bürstenrotor, als Doppelrolle oder dergleichen ausgebildet sein.

Die Leitfläche 24 wird in diesem Fall von einem sog. Schwadblech gebildet, das sich in dem Gehäuse 18 unterhalb der Decke 28 befindet und mittels einer Welle 36 mehr oder weniger oder gar nicht mittel- oder unmittelbar in den von der Gutbehandlungsvorrichtung 22 kommenden Gutstrom bewegbar ist. Generell kommt als Leitfläche 24 jede Fläche in Betracht, an der das Erntegut nach dem Verlassen der Gutbehandlungsvorrichtung 20 entlanggleitet.

Die Leitfläche 24 ist im wesentlichen rechteckig ausgebildet und starr mit der Welle 36 verbunden. Die Welle 36 ist in nicht näher bezeichneten Lagern in den Seitenwänden 30 schwenkbar gelagert und ist an einer Längskante der Leitfläche 24 angeschlossen. Von einer der Welle 36 gegenüberliegenden Endkante 38 aus erstrecken sich Öffnungen 40 in der Form von Schlitzen in Richtung der Welle 36.

Die Öffnungen 40 sind im Bereich der Endkante 38 offen und verlaufen geneigt zu der Längsmittenachse des Erntegeräts 10. Die Neigung der Öffnungen 40 ist so gewählt, daß sie von vorne nach hinten geringfügig divergieren. Die Öffnungen 40 erstrecken sich über einen beträchtlichen Teil der Leitfläche 24. Alternativ und nicht dargestellt, können sich die Öffnungen auch parallel zueinander erstrecken oder in der Art eines "V" divergieren.

In einer nicht gezeigten Ausführung können die Öffnungen 40 endseitig auch geschlossen sein, was dann denkbar ist, wenn sich das Erntegut nicht in den Öffnungen 40 verfangen und festsetzen kann.

Die Welle 36 ist an einem Ende mit einem Kurbelarm 42 versehen, mit dessen Hilfe die Stellung der Leitfläche 24 manuell verändert werden kann. Die Stellung kann durch nicht gezeigte Arretiermittel, wie Kulissen, Riegel, Bremsen oder dergleichen gesichert werden. Abhängig von der Stellung der Leitfläche 24 wird der Gutstrom mehr oder weniger stark nach unten abgelenkt und bildet ein breites Schwad. Ohne die Verwendung der Leitfläche 24 würde der Gutstrom von den Seitenblechen 34 quer zur Gutflußrichtung zusammengedrängt.

Das Leitmittel 26 enthält eine Tragplatte 44, eine Welle 46 und Leitelemente 48.

Die Tragplatte 44 ist rechteckig ausgebildet, ungefähr von der gleichen Größe wie die Leitfläche 24, und mit einer Längsseite an der Welle 46 drehfest angeschlossen. Die Tragplatte 44 kann sich auf der Oberseite der Decke 28 auflegen. Anstatt der Tragplatte 44 könnte auch eine andere Struktur, z. B. ein Rahmen, Schienen oder dergl. verwendet werden, solange der Zweck, nämlich die Leitelemente 48 untereinander zu verbinden, erreicht wird.

Die Welle 46 ist länger als die Tragplatte 44 und endseitig in Laschen 50 auf der Decke 28 drehbar gelagert. An einem Ende läuft die Welle 46 ebenfalls in einem Kurbelarm 52 aus, mit dem die Welle 46 geschwenkt werden kann. In gleicher Weise wie bei dem Kurbelarm 42 kann auch der Kurbelarm 52 mittels bekannter Vorrichtungen in einer beliebigen Stellung lagegesichert werden. Alternativ kann der Kurbelarm 52 wie auch der Kurbelarm 42 mittels einer Betätigungsvorrichtung, z. B. in der Form eines Motors, eines Gestänges oder eines Seilzugs verstellt werden.

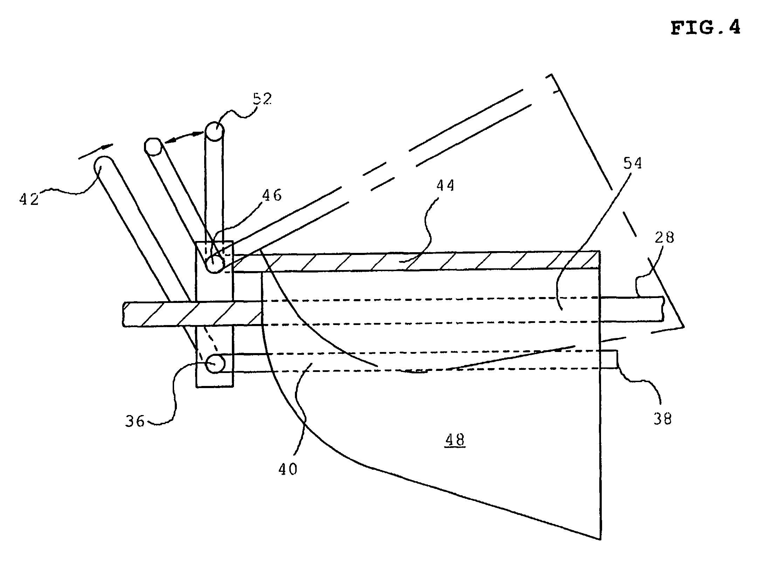

Die Leitelemente 48 entsprechen in ihrer Anzahl, Lage und Ausrichtung denen der Öffnungen 40. Wenn die Leitelemente 48 schmaler sind als die Öffnungen, können sie auch eine von der Ausrichtung der Öffnungen abweichende Stellung einnehmen. Wie bereits die Öffnungen, so können auch die Leitelement 48 parallel zueinander oder zu einer Mittenebene divergierend verlaufen. Während im ersten Fall lediglich ein seitlicher Versatz des Gutstroms stattfindet, führt eine "V"-förmige Anordnung zu einer Breitstreuung des Gutstroms. Im allgemeinen wird jedoch ein seitlicher Versatz des Gutstroms und eine Breitenstreuung bevorzugt, die zu einem Schwad führt, dessen Breite maximal der Erntebreite entspricht. Die Leitelemente 48 sind ausweislich Figur 4 in der Seitenansicht im wesentlichen dreiecksförmig ausgebildet, wobei ein Schenkel an der Tragplatte 44 befestigt ist, ein Schenkel am stromabwärts gelegenen Ende senkrecht zu dem ersten Schenkel verläuft und sich eine Hypothenuse von dem stromaufwärts gelegenen Ende bis zu dem stromabwärts gelegenen Ende erstreckt und somit in dem Betriebszustand nach Figur 4 eine Neigung zu dem Boden aufweist. Die Leitelemente 48 sind aus Blech gebildet und geeignet, beträchtliche seitliche Kräfte aufzunehmen.

Die Laschen 50 erstrecken sich vertikal von der Decke 28 und nehmen die Endbereiche der Welle 46 schwenkbar in sich auf.

Figur 4 zeigt den Zusammenbau des Gehäuses 18, der Leitfläche 24 und des Leitmittels 26 in einem Vertikalschnitt.

Ausweislich Figur 4 befindet sich die Tragplatte 44 oberhalb der Decke 28, so daß deckungsgleich mit den Öffnungen 40 in der Decke 28 Öffnungen 54 in der Form von Schlitzen vorhanden sind, durch die sich die Leitelemente 48 erstrecken können.

In einer alternativen nicht gezeigten Ausführungsform könnte die Tragplatte 44 in einem Ausschnitt in der Decke 28 aufgenommen werden.

In der gezeigten Ausführung befindet sich die Leitfläche 24 in einer oberen Stellung, in der sie nicht in den Gutstrom hineinragt. Infolgedessen gelangt der Gutstrom in den Bereich zwischen den Leitelementen 48 und wird breit gestreut bzw. abgelenkt.

Soll eine Breitstreuung oder seitliche Ablenkung nicht erfolgen, wird das Leitmittel 26 entgegen dem Uhrzeigerdrehsinn nach oben aus dem Innenbereich des Gehäuses 18 herausgeschwenkt und somit unwirksam. In diesem Fall gleitet der Gutstrom an der Unterseite der Decke 28 bzw. an der Unterseite der Leitfläche 28 entlang bis zum Kontakt der Seitenbleche 34 - falls solche vorhanden sind. Nach dem Kontakt mit den Seitenblechen 34 ergibt sich ein schmales Schwad.

Soll ein breites Schwad gebildet werden, wird die Leitfläche 24 im Uhrzeigerdrehsinn nach unten geschwenkt, und der Gutstrom prallt auf ihn auf, um in einem breiten Schwad auf den Boden zu fallen. Es ist nicht erforderlich, daß das Leitmittel 26 in seine gestrichelt dargestellte Position in Figur 4 gebracht wird.

Nach alledem kann also mittels der Erfindung das Erntegut auf mehrere Arten - schmales Schwad, breites Schwad, breit gestreut - auf dem Boden abgelegt werden, ohne daß es des Umbaus des Erntegeräts 10 bedarf. Zudem kann durch den Grad des Eintauchens der Leitelemente 48 in den Innenraum des Gehäuses 18 die Intensität des Einwirkens auf den Gutstrom variiert werden.

In dem vorliegenden Ausführungsbeispiel ist die Stellung der Leitelemente 48 an der Tragplatte 44 fest. Es ist jedoch auch möglich, die Leitelemente 48 einenends oder mittig um eine senkrecht auf der Tragplatte 44 stehende Achse schwenkbar anzubringen. In diesem Fall müßten die Leitelemente 48 mit ihrer Oberkante einen Abstand zu der Tragplatte 44 einhalten, der wenigstens der Stärke der Decke 28 und der Leitfläche 24 entspricht. Darüber hinaus müßte gewährleistet werden, daß die Leitelemente 48 die Ausrichtung der Öffnungen 40, 54 aufweisen, wenn das Leitmittel 26 vertikal geschwenkt wird. Mittels einer derartigen Schwenkmöglichkeit der Leitelemente 48 kann sowohl die Abwurfrichtung wie auch die Streubreite oder die Schwadbreite verändert werden.

## Patentansprüche

1. Erntegerät (10) mit einer Gutbehandlungsvorrichtung (20), einer oberen Leitfläche (24) und einem Leitmittel (26) mit wenigstens einem Leitelement (48) jeweils zum Führen eines Gutstroms stromabwärts der Gutbehandlungsvorrichtung (20), **dadurch gekennzeichnet, daß** die Leitfläche (24) wenigstens eine Öffnung (40) aufweist, durch die das Leitelement (48) wahlweise in einen Bereich unterhalb der Leitfläche (24) einführbar ist.

2. Erntegerät nach Anspruch 1, **dadurch gekennzeichnet, daß** die Leitfläche (24) von der Decke (28) eines Gehäuses (18) gebildet wird.

3. Erntegerät nach Anspruch 1, **dadurch gekennzeichnet, daß** die Leitfläche (24) als ein in den Gutstrom ragendes geneigtes Schwadblech ausgebildet ist.

4. Erntegerät nach Anspruch 3, **dadurch gekennzeichnet, daß** die Leitfläche (24) unterhalb einer Decke (28) eines den Gutstrom führenden Gehäuses (18) angebracht ist.

5. Erntegerät nach einem oder mehreren der vorherigen Ansprüche, **dadurch gekennzeichnet, daß** das Leitmittel (26) mehrere Leitelemente (48) aufweist, die miteinander verbunden und gemeinsam vertikal verstellbar sind.

6. Erntegerät nach einem oder mehreren der vorherigen Ansprüche, **dadurch gekennzeichnet, daß** das Leitmittel (26) oder das Leitelement (48) mittels einer Welle (46) um eine waagrechte Achse verschwenkbar gelagert sind.

7. Erntegerät nach einem oder mehreren der vorherigen Ansprüche, **dadurch gekennzeichnet, daß** die Öffnung (40) in einem stromabwärts gelegenen Bereich offen ist.

8. Erntegerät nach einem oder mehreren der vorherigen Ansprüche, **dadurch gekennzeichnet, daß** die Stellung des Leitelements (48) quer zu der Gutflußrichtung veränderbar ist.

9. Erntegerät nach einem oder mehreren der vorherigen Ansprüche, **dadurch gekennzeichnet, daß** mehrere Leitelemente (48) parallel, asymmetrisch divergierend oder symmetrisch divergierend verlaufen.

10. Erntegerät nach einem oder mehreren der vorherigen Ansprüche, **dadurch gekennzeichnet, daß** die Gutbehandlungsvorrichtung (20) als Mähvorrichtung oder als Halmgutaufbereitungsvorrichtung ausgebildet ist.

11. Erntegerät nach Anspruch 10, **dadurch gekennzeichnet, daß** im Falle einer Mähvorrichtung dieser eine Halmgutaufbereitungsvorrichtung (22) nachgeschaltet ist und die Leitfläche (24) und das Leitmittel (26) der Halmgutaufbereitungsvorrichtung (22) nachgeschaltet sind.

## Claims

1. A harvesting implement (10) with a crop processing device (20), an upper guide surface (24) and guide means (26) with at least one guide element (48), each for guiding a crop stream downstream of the crop processing device (20), **characterized in that** the guide surface (24) has at least one opening (40) through which the guide element (48) can be selectively introduced into a region below the guide surface (24).

2. A harvesting implement according to claim 1, **characterized in that** the guide surface (24) is formed by the cover (28) of a housing (18).

3. A harvesting implement according to claim 1, **characterized in that** the guide surface (24) is in the form of a swath plate proj ecting at an angle into the crop stream.

4. A harvesting implement according to claim 3, **characterized in that** the guide surface (24) is fitted below a cover (28) of a housing (18) guiding the crop stream.

5. A harvesting implement according to one or more of the preceding claims, **characterized in that** the guide means (26) has a plurality of guide elements (48) which are connected together and are adjustable vertically in common.

6. A harvesting implement according to one or more of the preceding claims, **characterized in that** the guide means (26) or the guide element (48) are mounted by means of a shaft (46) to pivot about a horizontal axis.

7. A harvesting implement according to one or more of the preceding claims, **characterized in that** the opening (40) is open in a region situated upstream.

8. A harvesting implement according to one or more of the preceding claims, **characterized in that** the position of the guide element (48) is adjustable transverse to the crop flow direction.

9. A harvesting implement according to one or more of the preceding claims, **characterized in that** a plurality of guide elements (48) extend parallel, asymmetrically divergent or symmetrically divergent.

10. A harvesting implement according to one or more of the preceding claims, **characterized in that** the crop processing device (20) is in the form of a mowing device or a stalk conditioning device.

11. A harvesting implement according to claim 10, **characterized in that**, in the case of a mowing device, this is followed by a stalk conditioning device (22) and the guide surface (24) and the guide means (26) follow the stalk conditioning device (22).

## Revendications

1. Appareil recolteur (10) comprenant un dispositif de traitement de produits (20), une surface de guidage supérieure (24) et un moyen de guidage (26) avec au moins un élément de guidage (48) respectivement pour guider un flux de produits en aval du dispositif de traitement de produits (20), **caractérisé en ce que** la surface de guidage (24) présente au moins une ouverture (40) par laquelle l'élément de guidage (48) peut être introduit dans une zone située sous la surface de guidage (24) facultativement.

2. Appareil recolteur selon la revendication 1, **caractérisé en ce que** la surface de guidage (24) est formée par la couverture (28) d'un carter (18).

3. Appareil recolteur selon la revendication 1, **caractérisé en ce que** la surface de guidage (24) présente la forme d'une planche à andain inclinée saillant dans le flux de produits.

4. Appareil recolteur selon la revendication 3, **caractérisé en ce que** la surface de guidage (24) est disposée sous une couverture (28) d'un carter (18) véhiculant le flux de produits.

5. Appareil recolteur selon l'une ou plusieurs des revendications précédentes, **caractérisé en ce que** le moyen de guidage (26) présente plusieurs éléments de guidage (48), qui sont reliées les uns aux autres et réglables conjointement dans le sens vertical.

6. Appareil recolteur selon l'une ou plusieurs des revendications précédentes, **caractérisé en ce que** le moyen de guidage (26) ou le moyen de guidage (48) sont European Patent Application No. 00 122 772.7-2313 disposés en pivotement autour d'un axe horizontal à l'aide d'un arbre (46).

7. Appareil recolteur selon l'une ou plusieurs des revendications précédentes, **caractérisé en ce que** l'ouverture (40) est ouverte dans une zone située en aval.

8. Appareil recolteur selon l'une ou plusieurs des revendications précédentes, **caractérisé en ce que** la position de l'élément de guidage (48) est réglable perpendiculairement au sens du flux des produits.

9. Appareil recolteur selon l'une ou plusieurs des revendications précédentes, **caractérisé en ce que** plusieurs éléments de guidage (48) s'étendent en parallèle, divergents de manière asymétrique ou divergents de manière symétrique.

10. Appareil recolteur selon l'une ou plusieurs des revendications précédentes, **caractérisé en ce que** le dispositif de traitement de produits (20) présente la forme d'un dispositif de moissonnage ou d'un dispositif de préparation de brins de paille.

11. Appareil recolteur selon la revendication 10, **caractérisé en ce que** dans le cas d'un dispositif de moissonnage, un dispositif de préparation de brins de paille (22) est placé en aval de celui-ci, et que la surface de guidage (24) ainsi que le moyen de guidage (26) sont placés en aval du dispositif de préparation de brins de paille (22).
